# EUROPÄISCHE PATENTSCHRIFT

(11) **EP 0 737 719 B1**
(45) Veröffentlichungstag und Bekanntmachung des Hinweises auf die Patenterteilung: **21.08.2002**
(21) Anmeldenummer: 96105295.8
(22) Anmeldetag: 03.04.1996
(51) Int. Cl.: C08L 77/06, C08L 71/10, C08L 71/12, C08J 5/18, D01F 6/80, D01F 6/74

(54) **Thermoplastische Formmassen auf der Basis von teilaromatischen Polyamiden und Polyetherimiden**
Thermoplastic compositions based on partial aromatic polyamides and polyetherimides
Compositions thermoplastiques à base de polyamides aromatiques partiels et polyétherimides

(30) Priorität: 12.04.1995 DE 19513848
(43) Veröffentlichungstag der Anmeldung: 16.10.1996
(73) Patentinhaber: BASF AKTIENGESELLSCHAFT, 67056 Ludwigshafen (DE)
(72) Erfinder: Weber, Martin, Dr., 67433 Neustadt (DE); Fisch, Herbert, Dr., 67157 Wachenheim (DE); Pipper, Gunter, 67098 Bad Dürkheim (DE); Gottschalk, Axel, Dr., 67435 Neustadt (DE)

(56) Entgegenhaltungen:
- EP-A- 0 345 486
- EP-A- 0 510 383
- US-A- 5 013 799

## Beschreibung

Die vorliegende Erfindung betrifft thermoplastische Formmassen, enthaltend
A) 1 bis 99 Gew.-% eines teilaromatischen Copolyamids aufgebaut aus

| | |
|---|---|
| a₁) 30 bis 44 mol-% | Einheiten, welche sich von Terephthalsäure ableiten |
| a₂) 6 bis 25 mol-% | Einheiten, welche sich von Isophthalsäure ableiten |
| a₃) 43 bis 49,5 mol-% | Einheiten, welche sich von Hexamethylendiamin ableiten |
| a₄) 0,5 bis 7 mol-% | Einheiten, welche sich von aliphatischen cyclischen Diaminen mit 6 bis 30 C-Atomen ableiten |

wobei die Molprozente der Komponenten a₁) bis a₄) zusammen 100 % ergeben
B) 1 bis 99 Gew.-% eines Polyetherimids
C) 0 bis 30 Gew.-% einer polymeren Komponente mit OH-Gruppen
D) 0 bis 60 Gew.-% faser- oder teilchenförmige Füllstoffe oder deren Mischungen
E) 0 bis 40 Gew.-% schlagzäh modifizierender Kautschuke
F) 0 bis 40 Gew.-% üblicher Zusatzstoffe und Verarbeitungshilfsmittel.

Weiterhin betrifft die vorliegende Erfindung die Verwendung derartiger thermoplastischer Formmassen zur Herstellung von Fasern, Folien und Formkörpern sowie die so erhältlichen Fasern, Folien und Formkörper selbst.

Polymermischungen aus Polyamiden und Polyetherimiden sind in einer Reihe von Literaturstellen beschrieben.

Blends auf der Basis von Polyetherimiden und teilaromatischen Polyamiden sind an sich bekannt. So sind Mischungen mit erhöhter Chemikalienresistenz aus Polyetherimiden und kristallinen Polyamiden aus der EP-A-104 659 zu entnehmen. In der US-A-5 013 799 wird beschrieben, daß Polyetherimide und Polyamide in bestimmten Mischungsverhältnissen Blends mit verbesserter Wärmeformbeständigkeit und Schlagzähigkeit ergeben. In der WO 89/10948 werden Mischungen aus Polyetherimiden, teilaromatischen Polyamiden und aliphatischen Polyamiden als Verträglichkeitsvermittler für den Einsatz als Kabelisolierung offenbart.

Für zahlreiche Anwendungen werden Werkstoffe benötigt, die auch noch bei Temperaturen oberhalb von 100°C sehr gute Steifigkeiten und Festigkeiten aufweisen. Die bekannten Polyetherimid/Polyamid Blends genügen jedoch gerade bei erhöhten Temperaturen diesen Anforderungen nicht zufriedenstellend. Aufgabe der vorliegenden Erfindung war es deshalb, Blends auf der Basis von Polyetherimiden und teilaromatischen Polyamiden zur Verfügung zu stellen, die bei Temperaturen von 100°C oder darüber,ein ausgewogenes Eigenschaftsbild und insbesondere gute Steifigkeiten und Festigkeiten aufweisen.

Diese Aufgabe wurde erfindungsgemäß durch die thermoplastischen Formmassen gemäß Anspruch 1 gelöst.

Bevorzugte Formmassen dieser Art sind den Unteransprüchen und der nachfolgenden Beschreibung zu entnehmen.

### Komponente A

Als Komponente A enthalten die erfindungsgemäßen Formmassen 1 bis 99, vorzugsweise 5 bis 93 und insbesondere 10 bis 77 Gew.-% eines teilaromatischen Polyamids, d.h. eines Polyamids, welches teilweise aus Monomeren aufgebaut ist, die einen aromatischen Ring enthalten.

Erfindungsgemäß sind die teilaromatischen Copolyamide aufgebaut aus
a₁) 30 bis 44, vorzugsweise 32 bis 40 und insbesondere 32 bis 38 mol-% Einheiten, welche sich von Terephthalsäure ableiten,
a₂) 6 bis 25, vorzugsweise 10 bis 21 und insbesondere 12 bis 18 mol-% Einheiten, welche sich von Isophthalsäure ableiten,
a₃) 43 bis 49,5, vorzugsweise 46 bis 48,5 und insbesondere 46,3 bis 48,2 mol-% Einheiten, welche sich von Hexamethylendiamin ableiten,
a₄) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,
wobei die Molprozente der Komponenten a₁) bis a₄) zusammen 100 % ergeben.

Die Diamineinheiten a₃) und a₄) werden vorzugsweise etwa äquimolar mit den Dicarbonsäureeinheiten a₁) und a₂) umgesetzt.

Geeignete Monomere a₄) sind vorzugsweise cyclische Diamine der Formel I 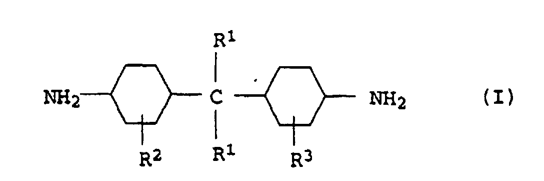 in der
- R¹: Wasserstoff oder eine C₁-C₄-Alkylgruppe,
- R²: eine C₁-C₄-Alkylgruppe oder Wasserstoff und
- R³: eine C₁-C₄-Alkylgruppe oder Wasserstoff bedeutet.

Besonders bevorzugte Diamine a₄) sind Bis(4-aminocyclohexyl)-methan, Bis(4-amino-3-methylcyclohexyl)methan, Bis(4-aminocyclohexyl)-2,2-propan oder Bis(4-amino-3-methylcyclohexyl)-2,2-propan.

Als weitere Monomere a₄) seien 1,3- und 1,4-Cyclohexandiamin und Isophorondiamin genannt.

Neben den vorstehend beschriebenen Einheiten a₁) bis a₄) können die teilaromatischen Copolyamide bis zu 20, vorzugsweise bis zu 10 und insbesondere bis zu 4 Gew.-% an weiteren polyamidbildenden Monomeren a₅) enthalten, wie sie von anderen Polyamiden bekannt sind.

Aromatische Dicarbonsäuren als Komponente a₅) weisen im allgemeinen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z.B. 4,4'- oder 3,3'-Diphenyldicarbonsäure, 4,4'oder 3,3'-Diphenylmethandicarbonsäure, 4,4'- oder 3,3'-Diphenylsulfondicarbonsäure, 1,4-oder 2,6-Naphthalindicarbonsäure und Phenoxyterephthalsäure.

Weitere polyamidbildende Monomere a₅) können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Teilaromatische Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der letztgenannten teilaromatischen Copolyamide liegen im allgemeinen im Bereich von 290°C bis 340°C, bevorzugt von 295°C bis 330°C, wobei dieser Schmelzpunkt mit einer hohen Glasübergangstemperatur von in der Regel mehr als 120°C, insbesondere mehr als 130°C (im trockenen Zustand) verbunden ist.

Bevorzugt weisen die teilaromatischen Copolyamide einen Kristallinitätsgrad > 30 %, bevorzugt > 35 %, und insbesondere > 40 % auf.

Der Kristallinitätsgrad ist ein Maß für den Anteil an kristallinen Fragmenten im Copolyamid und wird durch Röntgenbeugung oder indirekt durch Messung von ΔHₖᵣᵢₛₜ. bestimmt.

Selbstverständlich können auch Mischungen verschiedener teilaromatischer Copolyamide eingesetzt werden, wobei das Mischungsverhältnis beliebig ist.

Geeignete Verfahren zur Herstellung erfindungsgemäß verwendbarer teilaromatischer Copolyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 bis 340°C erhitzt, wobei ein Druck von 10 bis 50, insbesondere 15 bis 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 bis 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129 195 und 129 196 beschriebenen Verfahren.

Gemäß diesen Verfahren wird eine wäßrige Lösung der Monomere a₁) bis a₄) sowie gegebenenfalls a₅) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 bis 30 min polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

### Komponente B

Als Komponente B enthalten die erfindungsgemäßen Formmassen von 1 bis 99, bevorzugt von 5 bis 93 Gew.-% Polyetherimide. Besonders bevorzugte Formmassen enthalten von 10 bis 77 Gew.-% dieser Komponente.

Als Polyetherimide B können im prinzip sowohl aliphatische als auch aromatische Polyetherimide verwendet werden. Ebenso kommen Polyetherimide in Betracht, die sowohl aliphatische als auch aromatische Gruppen in der Hauptkette enthalten. Beispielsweise können Polyetherimide, die wiederkehrende Einheiten der allgemeinen Formel II 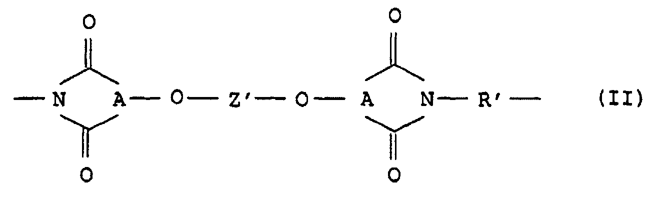 enthalten, eingesetzt werden, wobei A beispielsweise ausgewählt ist aus 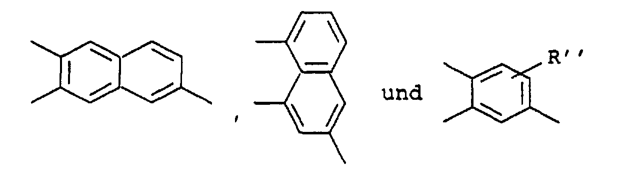 und
worin Z' und R' unabhängig voneinander gleich oder verschieden sein können. Z und R können z.B. eine C₁- bis C₃₀-Alkylengruppe bedeuten. Die Alkylengruppe kann sowohl linear als auch verzweigt oder auch zu einem Ring geschlossen sein. Darunter seien Methylen, Ethylen, n-Propylen, i-Propylen, Cyclohexylen oder n-Decylen genannt. Z' und R' können aber auch für einen C₇ - bis C₃₀-Alkylarylenrest stehen. Beispiele hierfür sind Diphenylenmethan, Diphenylenethan oder 2,2-Diphenylenpropan. Ferner können Z' und R' einen C₆ - bis C₁₈-Arylenrest wie Phenylen oder Biphenylen bedeuten. Die vorgenannten Gruppen können ihrerseits mit einem oder mehreren Substituenten substituiert, oder durch Heteroatome bzw. - gruppen, unterbrochen sein. Besonders bevorzugte Substituenten sind Halogenatome, bevorzugt Chlor oder Brom oder C₁ - bis C₁₀-Alkylreste, insbesonders Methyl oder Ethyl. Zu den bevorzugten Heteroatomen, bzw. -gruppen, zählen -SO₂-, -O- oder -S-. Im folgenden sind beispielhaft einige geeignete Reste Z' und R' aufgeführt: 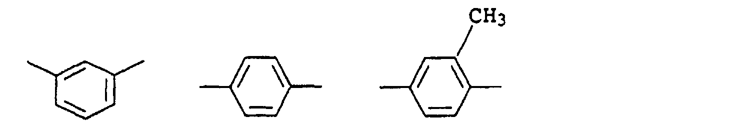 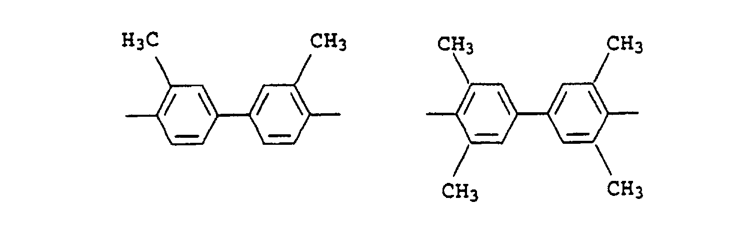 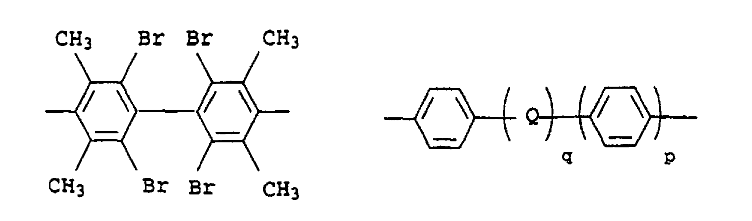 worin Q -C_{y}H_{2y-,} -CO-, -SO₂-, -O- oder -S- bedeuten kann, q 0 oder 1 ist, p 0 oder 1 bedeutet und y eine ganze Zahl von 1 bis 5 darstellt.

R'' kann C₁- bis C₁₀-alkyl oder C₁- bis C₁₀-Alkoxy bedeuten. Bevorzugt werden Polyetherimide, die wiederkehrende Einheiten der allgemeinen Formel III 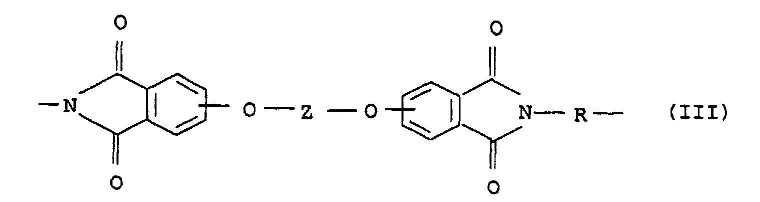 enthalten, eingesetzt, worin Z und R die gleiche Bedeutung haben wie Z' und R'.

Besonders bevorzugte Polyetherimide enthalten wiederkehrende Einheiten in denen Z 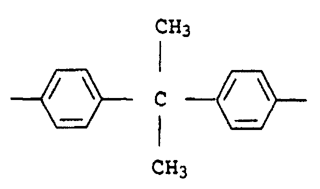 bedeutet und R ausgewählt ist aus 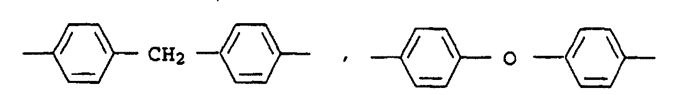 und

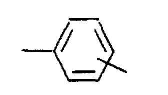

Ganz besonders bevorzugte Polyetherimide enthalten wiederkehrende Einheiten der Formel (III₁)

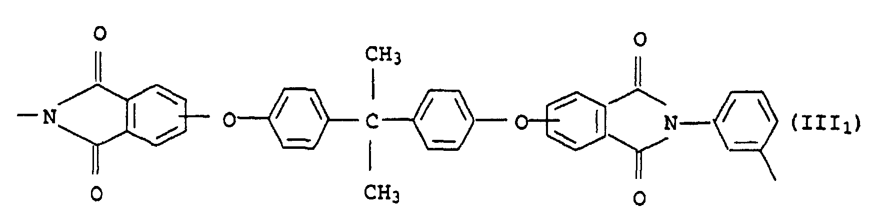

Die Polyetherimide B haben im allgemeinen mittlere Molekulargewichte (Zahlenmittelwert Mₙ) von 5000 bis 50 000, bevorzugt von 8000 bis 40 000. Sie sind entweder bekannt oder nach bekannten Methoden erhältlich.

So können entsprechende Dianhydride mit entsprechenden Diaminen zu den Polyetherimiden B umgesetzt werden. In der Regel findet diese Umsetzung in Substanz oder in einem inerten Lösungsmittel bei Temperaturen von 100 bis 250°C statt. Als Lösungsmittel eignen sich vor allem o-Dichlorbenzol oder m-Cresol. Ebenso können die Polyetherimide in der Schmelze bei Temperaturen von 200 bis 400°C, bevorzugt 230 bis 300°C hergestellt werden. Zur Herstellung der Polyetherimide werden im allgemeinen die Dianhydride mit den Diaminen im äquimoleren Verhältnis umgesetzt. Gewisse molare Überschüsse, z.B. 0,1 bis 5 Mol-% an Dianhydrid oder Diamin, sind jedoch möglich.

### Komponente C

Als Komponente C enthalten die erfindungsgemäßen Formmassen eine polymere Komponente mit Hydroxylgruppen. Der Anteil der Komponente C an den erfindungsgemäßen Formmassen liegt im Bereich von 0 bis 30 Gew.-%, bezogen auf das Gesamtgewicht der Komponenten A bis F und hängt von der Verträglichkeit des teilaromatischen Copolyamids mit der Komponente B ab. Im allgemeinen haben sich Anteile von 1 bis 20, insbesondere von 3 bis 15 Gew.-% als besonders vorteilhaft herausgestellt.

Komponente C hat verträglichkeitsvermittelnde Wirkung. Diese beruht aller Wahrscheinlichkeit nach darauf, daß zwischen der Komponente C und den Komponenten A und B Wechselwirkungen, zum Beispiel H-Brückenbindungen auftreten, die eine bessere Haftung der Phasen aneinander bewirken.

Wie bereits erwähnt, sind prinzipiell alle Polymere mit Hydroxylgruppen, die im wesentlichen frei zur Verfügung stehen, geeignet. Es ist natürlich darauf zu achten, daß die Komponenten A und B gegenüber der Komponente C stabil sind. Dies ist insbesondere bei Verwendung von Verbindungen mit sauren -OH-Gruppen zu beachten.

Unter Beachtung dieser Voraussetzungen haben sich einige Gruppen von Verbindungen als besonders vorteilhaft herausgestellt, die nachfolgend beschrieben werden. Es ist jedoch grundsätzlich möglich, auch andere Komponenten C einzusetzen, solange die Stabilität der Komponenten A und B nicht darunter leidet.

Die erste Gruppe besonders geeigneter Polymerer sind Polykondensate aus aliphatischen oder aromatischen Diolen oder höherwertiger Alkohole mit Epihalogenhydrinen. Derartige Verbindungen und Verfahren zu ihrer Herstellung sind dem Fachmann an sich bekannt, weshalb sich hier nähere Angaben erübrigen. Grundsätzlich sind aliphatische oder aromatische Diole geeignet. Besonders bevorzugte Dihydroxiverbindungen sind die für die Herstellung von Polycarbonaten eingesetzten Diole.

Wegen der leichten Zugänglichkeit wird ein Polykondensat aus Bisphenol A und Epichlorhydrin mit der Struktur 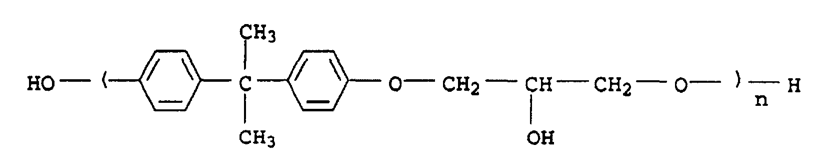 bevorzugt verwendet.

Neben der Möglichkeit der Verwendung von Polymeren, die bereits in der Hauptkette die Hydroxylgruppe aufweisen, ist es auch möglich, Polymere oder Copolymere zu verwenden,die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymere als Pfropfgrundlagen geeignete sind, die mit den Komponenten A und B nicht vollkommen unverträglich sind. Ein gewisser Grad an Unverträglichkeit kann durch eine Erhöhung des Anteils der Hydroxylgruppen ausgeglichen werden.

Geeignete Komponenten C sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co- oder Pfropfmonomeren mit Hydroxylgruppen -OH ist abhängig davon, wie gut verträglich das Basispolymere mit den Komponenten A und B ist. Je besser die Verträglichkeit, desto geringer kann der Anteil der OH-Gruppen sein. Aus dem Vorstehenden ergibt sich, daß eine Vielzahl von Polymeren als Komponente C geeignet sind, von denen nachfolgend nur als Beispiel einige besonders bevorzugte Arten näher vorgestellt werden.

Die erste Gruppe sind Polymere und Copolymere mit einem Gehalt von bis zu 100 Mol-% Vinylphenylcarbinolen, wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien die Polymeren und Copolymeren dieser Gruppe mit Vinylphenolen genannt, die im Kern auch Substituenten enthalten können. Substituenten, die die Acidität des phenolischen Wasserstoffs erhöhen, sind besonders geeignet, so z.B. Halogensubstituenten, aber auch andere elektronenanziehende Substituenten.

Als dritte Gruppe seien die Phenol-Formaldehyd-Polykondensate genannt, soweit sie unvernetzt und löslich sind. Diese Produkte können linear oder verzweigt sein.

Daneben sind grundsätzlich Polymere und Copolymere mit allen polymerisierbaren oder pfropfbaren Alkoholen zu nennen.

Es sei erwähnt, daß Polymere mit OH-Hydroxylgruppen auf der Basis von Polyamiden oder Polyglutarimiden besonders bevorzugt sind, da hier die Verträglichkeit mit mindestens der Komponente A oder B von vorneherein gegeben ist, so daß der Anteil der OH-Gruppen gesenkt werden kann.

Die Herstellung der Komponente C kann nach üblichen Verfahren zur Polykondensation bzw. Pfropf- oder Copolymerisation erfolgen, weshalb sich hier nähere Angaben erübrigen.

### Komponente D

Neben den Komponenten A, B und C können die erfindungsgemäßen Formmassen noch Verstärkungs- oder Füllstoffe enthalten, der Anteil dieser Stoffe kann dabei bis 60, vorzugsweise von 0 bis 45 und insbesondere 10 bis 40 Gew.-% betragen.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin) sowie Ruß.

Als faserförmige Verstärkungsstoffe sind Kaliumtitanatwhisker, Aramidfasern und insbesondere Glasfasern zu nennen. Bei der Verwendung von Glasfasern können diese zur besseren Verträglichkeit mit dem Matrixmaterial mit einer Schlichte und einem Haftvermittler ausgerüstet sein.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,04 bis 0,5 mm.

Bevorzugte Kombinationen von Füllstoffen sind z.B. 5 bis 30 Gew.-% Wollastonit oder Talkum mit 1 bis 10 Gew.-% Glasfasern.

### Komponente E

Neben den Komponenten A bis D können die erfindungsgemäßen Formmassen auch bis zu 40, vorzugsweise bis 25 Gew.-% eines schlagzähmodifizierenden Kautschuks E enthalten.

Bevorzugte kautschukelastische Polymerisate sind Polymerisate auf Basis von Olefinen, die aus folgenden Komponenten aufgebaut sind:
e₁) 40 bis 100 Gew.-% mindestens eines α-Olefins mit 2 bis 8 C-Atomen
e₂) 0 bis 50 Gew.-% eines Diens
e₃) 0 bis 45 Gew.-% eines C₁-C₁₂-Alkylesters der Acrylsäure oder Methacrylsäure oder Mischungen derartiger Ester,
e₄) 0 bis 40 Gew.-% einer ethylenisch ungesättigen Mono- oder Dicarbonsäure oder einem funktionellen Derivat einer solchen Säure
e₅) 0 bis 40 Gew.-% eines Epoxygruppen enthaltenden Monomeren,
e₆) 0 bis 5 Gew.-% sonstiger radikalisch polymerisierbarer Monomerer, mit der Maßgabe, daß die Komponente C kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere e₂) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien, 5-Ethyliden-norbornen und Dicyclopentadien. Der Diengehalt der EPDM-Kautschke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von α-Olefinen mit 2-8 C-Atomen, insbesondere des Ethylens, mit C₁-C₁₈-Alkylestern der Acrylsäure und/oder Methacrylsäure.

Grundsätzlich eignen sich alle primären und sekundären C₁-C₁₈-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester e₃) an den Olefinpolymerisaten beträgt 0-60, vorzugsweise 10-50 und insbesondere 30-45 Gew.-%.

Anstelle der Ester e₃) oder zusätzlich zu diesen können in den Olefinpolymerisaten auch säurefunktionelle und/oder latent säurefunktionelle Monomere ethylenisch ungesättigter Mono- oder Dicarbonsäuren e₄) oder Epoxygruppen aufweisende Monomere e₅) enthalten sein.

Als Beispiele für Monomere e₄) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut

R⁴C(COOR⁵)=C(COOR⁶)R⁷ (IV)

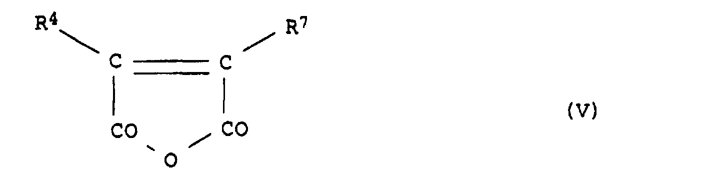

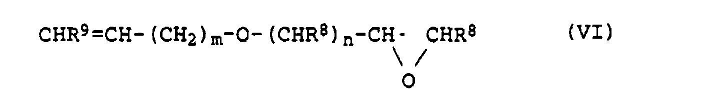

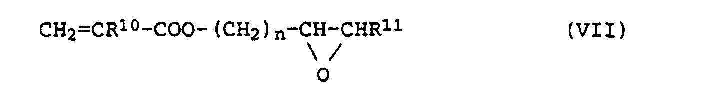

wobei die Reste R⁴ - R¹¹ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R⁴ - R⁹ ist Wasserstoff, für m der Wert 0 oder 1 und für n der Wert 1. Die entsprechenden Verbindungen sind Maleinsäure, Fumarsäure, Maleinsäureanhydrid, e₄) bzw. Alkenylglycidylether oder Vinylglycidylether e₅).

Bevorzugte Verbindungen der Formeln IV, V, VI und VII sind Maleinsäure und Maleinsäureanhydrid als Komponente e₄) und Epoxygruppen-enthaltende Ester der Acrylsäure und/oder Methacrylsäure, wobei Glycidylacrylat und Glycidylmethacrylat (als Komponente e₅) besonders bevorzugt werden.

Der Anteil der Komponenten e₄) bzw. e₅) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

| | |
|---|---|
| 50 bis 98,9 | insbesondere 60 bis 95 Gew.% Ethylen, |
| | |
| 0,1 bis 20,0 | insbesondere 0,15 bis 15 Gew.% Glycidylacrylat und/oder Glycidylmethacrylat, Acrylsäure und/oder Maleinsäureanhydrid, |
| | |
| 1 bis 45,0 | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere e₆) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere E beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können pfropfvernetzende Monomere verwendet werden, d.h. Monomere mit zwei oder mehr polymerisierbaren Doppelbindungen, die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E bis zu 5 Gew.%, vorzugsweise nicht mehr als 3 Gew.%, bezogen auf E.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere E können auch nach anderen üblichen Verfahren, z.B. durch Suspensionspolymerisation, hergestellt werden.

Des weiteren können auch Pfropfkautschuke auf Siloxan-Basis verwendet werden.

Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso) cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Geeignete Schlagzähmodifier sind auch thermoplastische Polyurethan-Elastomere. Deren Herstellung ist dem Fachmann bekannt.

Selbstverständlich können auch Mischungen verschiedener Kautschuke eingesetzt werden.

### Komponente F

Neben den wesentlichen Komponenten A, B sowie gegebenenfalls C, D und E können die erfindungsgemäßen Formmassen übliche Zusatzstoffe und Verarbeitungshilfsmittel F enthalten. Deren Anteil beträgt im allgemeinen bis zu 40, vorzugsweise von 0 bis zu 15 Gew.-%, bezogen auf das Gesamtgewicht der Komponenten A bis F.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃.Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banburry-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 295 bis 360°C (d.h. oberhalb des Schmelzpunkts von A) erforderlich.

Die erfindungsgemäßen Formmassen zeichnen sich durch hohe Steifigkeit bei Temperaturen oberhalb von 100°C sowie sehr gute mechanische Eigenschaften aus. Überraschenderweise haben die erfindungsgemäßen Formmassen auch vorteilhafte Schwindungseigenschaften. Aus den erfindungsgemäßen Formmassen können Formkörper, Folien oder Fasern hergestellt werden. Aufgrund der genannten Eigenschaften sind die erfindungsgemäßen Formmassen insbesondere geeignet zur Herstellung von Formteilen für den Elektro- und Elektronikbereich sowie Fahrzeug- und Apparatebau.

### Beispiele

### Herstellung der Komponenten A₁₋₃ sowie AV₁₋₃

Die Herstellung der als Komponente A verwendeten teilaromatischen Copolyamide wird im folgenden ausführlich beschrieben, die Zusammensetzung der Produkte kann Tabelle 1 entnommen werden. Als relatives Maß für den Kristallinitätsgrad wurde die spezifische Schmelzwärme ΔHₖᵣᵢₛₜ. mittels Differential Scanning Calometrie (DSC 9900, Fa. Du Pont) bei einer Aufheizrate von 20°C/min bestimmt.

### Komponenten A₁ und A₃

Eine 60 %ige wäßrige Lösung, bestehend aus Terephthalsäure, Isophthalsäure, Hexamethylendiamin bzw. Bis(4-amino-3-methylcyclohexyl)methan oder Bis(4-aminocyclohexyl)methan wurde in den in der Tabelle angegebenen Mengenverhältnissen aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 cm². Die Verweilzeit im Verdampfer betrug 50 s. Das aus dem Verdampfer austretende Gemisch aus Präpolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Produkt A₁ eine sehr helle Eigenfarbe und eine Viskositätszahl von 48 ml/g (gemessen als 0,5 %ige Lösung bei 25°C in 96 gew.-%iger H₂SO₄ gemäß DIN 53 246). A₃ hatte eine Viskositätszahl von 49 ml/g.

Die Produkte A₁ und A₂ wiesen in etwa eine Äquivalenz von Carboxyl- und Aminoendgruppen auf.

Im Austragsextruder wurde die Schmelze dann jeweils auf Normaldruck entspannt und bei einer Verweilzeit von weniger als 1 Minute praktisch nicht mehr weiter kondensiert.

Anschließend wurden die Produkte in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 200°C diskontinuierlich auf eine Viskositätszahl von 112 ml/g getempert. Die Verweilzeit betrug 8 bis 18 h. Im Verlauf dieser Temperung wurde gegebenenfalls auch ein Großteil der extrahierbaren Restmonomere vom Wasserdampf extrahiert.

### Komponente A₂

In einem 5 1 Laborautoklaven wurden 2 kg einer Monomermischung entsprechend Beispiel 1 mit 700 ml Wasser vorgelegt. Die Mischung war in 5 Glasröhren zu je 800 ml Inhalt verteilt. Der Autoklav wurde 1 h auf 350°C aufgeheizt, wobei der resultierende Wasserdampfdruck nach Erreichen von 20 bar durch Entspannen überschüssigen Wassers konstant gehalten wurde. Danach wurden Temperatur und Druck noch 1 h konstant gehalten. Anschließend wurde auf 330°C abgekühlt und der Autoklav auf Normaldruck entspannt. Die Heizung des Autoklaven wurde abgeschaltet, wobei nach ca. 3 h Raumtemperatur erreicht war.

Die Glasröhren wurden aus dem Autoklaven entnommen und deren Inhalt grob gemahlen. Das erhaltene Produkt wurde in fester Phase bei 198°C unter Stickstoff 10 h auf eine Viskositätszahl von 115 ml/g nachkondensiert.

### Komponenten AV₁₋₃

In einem 10 l Laborautoklaven wurden 3 kg einer Monomermischung, die das in der Tabelle 1 aufgeführte Polymer ergaben, mit 2500 ml Wasser vorgelegt. Die Herstellung und Aufarbeitung erfolgte wie bei Komponente A₂. Das Copolyamid wies nach der Nachkondensation in fester Phase unter Stickstoff bei 196°C (10 h) eine VZ von 114 ml/g auf.

### Komponente AV₄

Aliphatisches Polyamid aus 1,6-Diaminohexan und Adipinsäure mit einem K-Wert (nach Fikentseher) von 76; entsprechend einer relativen Viskosität η rel von 2,95, gemessen in 1 gew.-%iger Lösung in 96 gew.-%iger Schwefelsäure bei 25°C.

### Komponente B₁

Es wurde handelsübliches Polyetherimid ( z.B. Ultem® 1010 der Firma General Electric) eingesetzt, das durch einen Zugmodul von 3000 N/mm² charakterisiert ist und aus Einheiten der Struktur 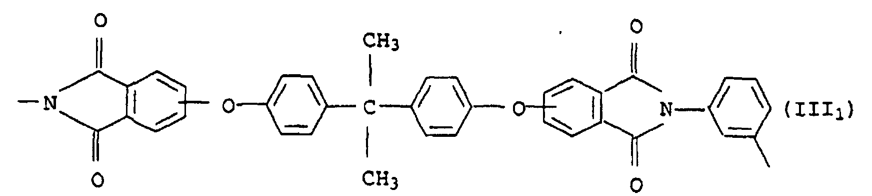 aufgebaut ist.

### Komponente C

Kondensationsprodukt aus Bisphenol A und Epichlorhydrin mit einer relativen Viskosität von 1,13, gemessen an einer 0,5 gew.-%igen Lösung in Dichlormethan bei 23°C (Phenoxy® der Union Carbide Corporation).

### Komponente D

Glasfaserrovings mit einer Dicke von 10 µm und einer Schlichte aus Polyurethan.

### Komponente E

Ethylen-Propylen-Kautschuk mit 0,7 Gew.-% Maleinsäureanhydrid gepfropft, gekennzeichnet durch einen Schmelzindex von 3 g/10 min, gemessen bei 2,16 kg, 230°C (Handelsprodukt Exxelor VA/1803 der Firma Exxon).

**Tabelle 1:**

| Zusammensetzung der eingesetzten teilaromatischen Copolyamide | | | | | | | |
|---|---|---|---|---|---|---|---|
| Monomere | | erfindungsgemäß | | | zum Vergleich | | |
| | | A₁ | A₂ | A₃ | AV₁ | AV₂ | AV₃ |
| Hexamethylendiamin | mol-% | 48,1 | 48,1 | 48,0 | 46,2 | 49,7 | 42,7 |
| | Gew.-% | 39,1 | 39,1 | 35,9 | 36,9 | 40,8 | 33,3 |
| Terephthalsäure | mol-% | 32,2 | 32,2 | 40,3 | 29,5 | 32,2 | 32,2 |
| | Gew.-% | 37,5 | 37,5 | 42,2 | 34,0 | 37,8 | 35,9 |
| Isophthalsäure | mol-% | 17,8 | 17,8 | 18,6 | 29,5 | 17,8 | 17,8 |
| | Gew.-% | 20,6 | 20,6 | 18,6 | 23,6 | 20,9 | 20,9 |
| Bis(4-amino-cyclohexyl)-methan | mol-% | 1,9 | 1,9 | - | 3,8 | 0,3 | 7,3 |
| | Gew.-% | 2,8 | 2,8 | - | 5,5 | 0,45 | 10,9 |
| Bis (4-amino-3-methylcyclohexyl)methan | mol-% | - | - | 2 | - | - | - |
| | Gew. -% | - | - | 3 | - | - | - |
| Δ Hₖᵣᵢₛₜ | [J/g] | 54 | 52 | 51 | 32 | 36 | 31 |

Die einzelnen Komponenten in den nachfolgenden Beispielen wurden in einem Zweiwellenextruder bei einer Massetemperatur vom 300 bis 340°C gemischt. Die Schmelze wurde durch ein Wasserbad geleitet und granuliert.

Das getrocknete Granulat wurde bei 300 bis 340°C zu Zugstäben, Rundscheiben und Normkleinstäben verarbeitet.

Die Steifigkeit (E-Modul) und Reißdehnung (ε_{R}) der Blends wurde durch einen Zugversuch nach DIN 53 455 an Schulterstäben bei 23°C bestimmt. Des weiteren wurde die Steifigkeit der Proben bei 80°C bzw. 100°C bestimmt.

Die Kerbschlagzähigkeit (aₖ) der Blends wurde nach DIN 53 353 an Normkleinstäben bestimmt.

Die Schwindung wurde dadurch bestimmt, daß die prozentuale Abweichung von gespritzten Testkästchen von der Formabmessung (Länge=120,0 mm) ermittelt wurde.

Die Zusammensetzung der Formmassen und die Ergebnisse der Prüfungen sind den Tabellen 2 und 3 zu entnehmen.

**Tabelle 2:**

| Glasfaserhaltige Formmassen | | | | | | |
|---|---|---|---|---|---|---|
| Beispiel Nr. | 1 | 2 | 3 | 4 | V1 | V2 |
| Komponente[Gew.-%] | | | | | | |
| A₁ | 48 | 25 | - | - | - | - |
| A₃ | - | - | 48 | 25 | - | - |
| AV₁ | - | - | - | - | 25 | - |
| AV₄ | - | - | - | - | - | 25 |
| B | 22 | 45 | 22 | 45 | 45 | 45 |
| D | 30 | 30 | 30 | 30 | 30 | 30 |
| E [N/mm²] bei RT | 10500 | 10000 | 10400 | 10100 | 9900 | 9600 |
| ε_{R} [%] | 3,2 | 2,7 | 3,1 | 2,8 | 2,3 | 1,7 |
| E [N/mm²] bei 100° | 9400 | 9600 | 9400 | 9500 | 8600 | 7300 |
| aₖ [kJ/m²] | 7,2 | 5,4 | 7,0 | 5,3 | 4,5 | 3,2 |
| Schwindung [%] | 0,4 | 0,5 | 0,4 | 0,5 | 0,5 | 0,7 |
| V: Vergleichsbeispiel | | | | | | |

**Tabelle 3:**

| unverstärkte Formmassen | | | | | | |
|---|---|---|---|---|---|---|
| Formmasse Nr. | 5 | 6 | 7 | 8 | V3 | V4 |
| Komponente[Gew.-%] | | | | | | |
| A₁ | 35 | 28 | 25,2 | - | - | - |
| A₂ | - | - | - | 25,2 | - | - |
| AV₂ | - | - | - | - | 25,2 | - |
| AV₃ | - | - | - | - | - | 25,2 |
| B | 65 | 65 | 58,4 | 58,4 | 58,4 | 58,4 |
| C | - | - | 10 | 10 | 10 | 10 |
| E | - | 7 | 6,4 | 6,4 | 6,4 | 6,4 |
| E [N/mm²] bei RT | 3100 | 2900 | 2800 | 2750 | 2700 | 2650 |
| ε_{R} [%] | 8,2 | 23 | 66 | 59 | 24 | 26 |
| E [N/mm²] bei 80°C | 2600 | 2400 | 2300 | 2300 | 1900 | 1900 |
| Wₛ [Nm] | 0,1 | 32 | 78 | 69 | 16 | 23 |
| V: Vergleichsbeispiel | | | | | | |

## Patentansprüche

1. Thermoplastische Formmassen, enthaltend
A) 1 bis 99 Gew.-% eines teilaromatischen Copolyamids aufgebaut aus
| | |
|---|---|
| a₁) 30 bis 44 mol-% | Einheiten, welche sich von Terephthalsäure ableiten |
| a₂) 6 bis 25 mol-% | Einheiten, welche sich von Isophthalsäure ableiten |
| a₃) 43 bis 49,5 mol-% | Einheiten, welche sich von Hexamethylendiamin ableiten |
| a₄) 0,5 bis 7 mol-% | Einheiten, welche sich von aliphatischen cyclischen Diaminen mit 6 bis 30 C-Atomen ableiten |
wobei die Molprozente der Komponenten a₁) bis a₄) zusammen 100 % ergeben
B) 1 bis 99 Gew.-% eines Polyetherimids
C) 0 bis 30 Gew.-% einer polymeren Komponente mit OH-Gruppen
D) 0 bis 60 Gew.-% faser- oder teilchenförmige Füllstoffe oder deren Mischungen
E) 0 bis 40 Gew.-% schlagzäh modifizierender Kautschuke
F) 0 bis 40 Gew.-% üblicher Zusatzstoffe und Verarbeitungshilfsmittel.

2. Thermoplastische Formmassen nach Anspruch 1, in denen sich die Einheiten a₄ der teilaromatischen Copolyamide A von Bis((4-aminocyclohexyl)methan oder Bis (4-amino-3-methylcyclohexyl)methan oder deren Mischungen ableiten.

3. Thermoplastische Formmassen nach Anspruch 1 oder 2, in denen 2 bis 20 Gew.-% der Komponente C enthalten sind.

4. Thermoplastische Formmassen nach einem der Ansprüche 1 bis 3, enthaltend als Komponente C ein Polykondensat aus aliphatischen oder aromatischen mehrwertigen Alkoholen mit Epihalogenhydrinen.

5. Verwendung der thermoplastischen Formmassen gemäß einem der Ansprüche 1 bis 4 zur Herstellung von Fasern, Folien und Formkörpern.

6. Fasern, Folien und Formkörper, erhältlich aus thermoplastischen Formmassen gemäß einem der Ansprüche 1 bis 4.

## Claims

1. A thermoplastic molding material containing
A) from 1 to 99% by weight of a partly aromatic copolyamide composed of
| | |
|---|---|
| a₁) from 30 to 44 mol% | of units which are derived from terephthalic acid, |
| a₂) from 6 to 25 mol% | of units which are derived from isophthalic acid, |
| a₃) from 43 to 49.5 mol% | of units which are derived from hexamethylenediamine and |
| a₄) from 0.5 to 7 mol% | of units which are derived from aliphatic cyclic diamines of 6 to 30 carbon atoms, |
the molar percentages of components a₁) to a₄) together giving 100%,
B) from 1 to 99% by weight of a polyetherimide,
C) from 0 to 30% by weight of a polymeric component having OH groups,
D) from 0 to 60% by weight of fibrous or particulate fillers or mixtures thereof,
E) from 0 to 40% by weight of rubber impact modifiers and
F) from 0 to 40% by weight of conventional additives and processing assistants.

2. A thermoplastic molding material as claimed in claim 1, in which the units a₄ of the partly aromatic copolyamides A are derived from bis(4-aminocyclohexyl)methane or bis(4-amino-3-methylcyclohexyl)methane or a mixture thereof.

3. A thermoplastic molding material as claimed in claim 1 or 2, in which from 2 to 20% by weight of component C are present.

4. A thermoplastic molding material as claimed in any of claims 1 to 3, containing, as component C, a polycondensate of aliphatic or aromatic polyhydric alcohols with epihalohydrins.

5. Use of a thermoplastic molding material as claimed in any of claims 1 to 4 for the production of fibers, films and moldings.

6. A fiber, film or molding obtainable from a thermoplastic molding material as claimed in any of claims 1 to 4.

## Revendications

1. Masses de moulage thermoplastiques, contenant
A) 1 à 99% en poids d'un copolyamide partiellement aromatique, constitué de
| | |
|---|---|
| a₁) 30 à 44 moles % | d'unités qui dérivent d'acide téréphtalique, |
| a₂) 6 à 25 moles % | d'unités qui dérivent d'acide isophtalique, |
| a₃) 43 à 49,5 moles % | d'unités qui dérivent d'hexaméthylènediamine, |
| a₄) 0,5 à 7 moles % | d'unités qui dérivent de diamines cycliques aliphatiques comportant 6 à 30 atomes de C, |
les % molaires des composants a₁) à a₄) formant ensemble 100%,
B) 1 à 99% en poids d'un polyétherimide,
C) 0 à 30% en poids d'un composant polymère présentant des groupes OH,
D) 0 à 60% en poids de matières de remplissage en forme de fibres ou de particules ou de leurs mélanges,
E) 0 à 40% en poids de caoutchoucs modifiant la résistance aux chocs,
D) 0 à 40% en poids d'additifs et adjuvants de traitement courants.

2. Masses de moulage thermoplastiques suivant la revendication 1, dans lesquelles les unités a₄ des copolyamides A partiellement aromatiques dérivent de bis-((4-aminocyclohexyl)-méthane ou de bis-(4-amino-3-méthylcyclohexyl)-méthane) ou de leurs mélanges.

3. Masses de moulage thermoplastiques suivant l'une des revendications 1 et 2, dans lesquelles 2 à 20% en poids du composant C sont contenus.

4. Masses de moulage thermoplastiques suivant l'une des revendications 1 à 3, contenant, comme composant C, un produit de polycondensation d'alcools polyvalents aliphatiques ou aromatiques avec des épihalogénohydrines.

5. Utilisation des masses de moulage thermoplastiques suivant l'une des revendications 1 à 4, pour la fabrication de fibres, de feuilles et de corps façonnés.

6. Fibres, feuilles et corps façonnés, que l'on peut obtenir à partir des masses de moulage thermoplastiques suivant l'une des revendications 1 à 4.
